# EUROPEAN PATENT APPLICATION

(11) **EP 4 675 282 A1**
(43) Date of publication of application: **07.01.2026**
(21) Application number: 25187041.6
(22) Date of filing: 02.07.2025
(51) Int. Cl.: G01N 35/04

(54) **SPECIMEN SUPPLY DEVICE**

(30) Priority: 05.07.2024 JP 2024108970
(71) Applicant: Aoi Seiki Co., Ltd., Kumamoto-shi, Kumamoto-ken 861-8038 (JP)
(72) Inventor: ITOH, Teruaki, Kumamoto-shi, 861-8038 (JP)
(74) Representative: van Dam, Vincent

(57) **Abstract**

A specimen supply device according to an embodiment comprises a first supply unit including: a first housing unit, a first auxiliary member that moves vertically; and a first push-up member that moves vertically; a second supply unit including: a second housing unit a second auxiliary member that moves vertically; and a second push-up member that moves vertically; and a regulating member that is disposed adjacent to one side of the second push-up member at the time of rising and includes a holding portion that holds a specimen container.

## Description

### FIELD

The present invention relates generally to a specimen supply device.

### BACKGROUND

For example, in specimen processing such as inspection and analysis of a specimen such as blood and serum, a specimen container is transported, and various processing is performed by various detection devices installed in a transport path (Jpn. Pat. Appln. KOKAI Publication No. 2014-233954 A)

In such specimen processing, for example, a supply device has been proposed in which specimen containers randomly stacked in a housing unit are lifted one by one, and are supplied from a discharge port to a predetermined supply destination in the same direction. The supply device includes a push-up member that has an upper surface on which only one specimen container is placed and moves up and down, and an auxiliary member that agitates a large number of specimen containers by moving up and down, and sequentially guides the specimen containers to an upper discharge port while aligning the posture one by one.

In such a supply device, if the position of the discharge port is too high, it takes time to push up the specimen container and the specimen container becomes large. On the other hand, if the position of the discharge port is too low, the number of specimen containers that can be housed is limited, so that it is difficult to ensure processing efficiency.

### SUMMARY

A specimen supply device according to an embodiment comprises a first supply unit including: a first housing unit forming a first housing space capable of housing a plurality of specimen containers; a first auxiliary member that is provided in the first housing space, has a guide surface that descends to one side in a first direction, and moves vertically; and a first push-up member that is disposed adjacent to one side of the first auxiliary member in the first housing space, has a guide surface that descends to one side, and moves vertically; a second supply unit including: a second housing unit having a second housing space provided on one side of the first housing space; a second auxiliary member that is provided in the second housing space, has a guide surface that descends to one side in the first direction, and moves vertically; and
a second push-up member that is disposed adjacent to one side of the second auxiliary member in the second housing space, has a guide surface that descends to one side, and moves vertically; and a regulating member that is disposed adjacent to one side of the second push-up member at the time of rising and includes a holding portion that holds the specimen container.

### BRIEF DESCRIPTION OF DRAWINGS

FIG. 1 is a side view showing a configuration of a specimen processing device according to a first embodiment of the present invention.
FIG. 2 is a perspective view showing a configuration of a specimen supply device of the specimen processing device.
FIG. 3 is a side view of the specimen supply device.
FIG. 4 is a perspective view showing a state of the specimen supply device at the time of descending.
FIG. 5 is a side view showing a state of the specimen supply device at the time of descending.
FIG. 6 is an enlarged perspective view of a part of the specimen supply device.
FIG. 7 is an explanatory view showing an operation of the specimen supply device.
FIG. 8 is an explanatory view showing an operation of the specimen supply device.
FIG. 9 is an explanatory view showing an operation of the specimen supply device.
FIG. 10 is an explanatory view showing a shape of an upper end surface of the specimen supply device.

### DETAILED DESCRIPTION

### First Embodiment

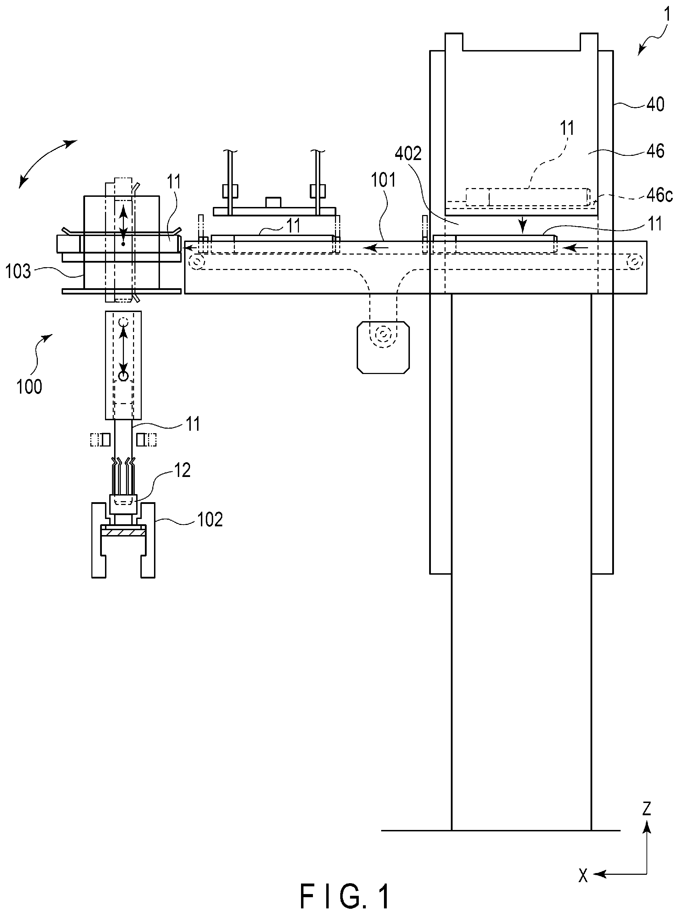

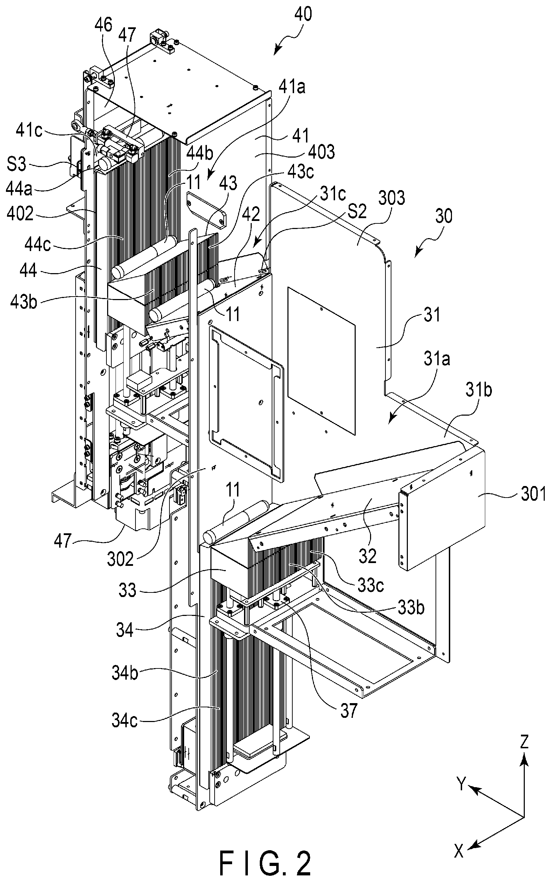

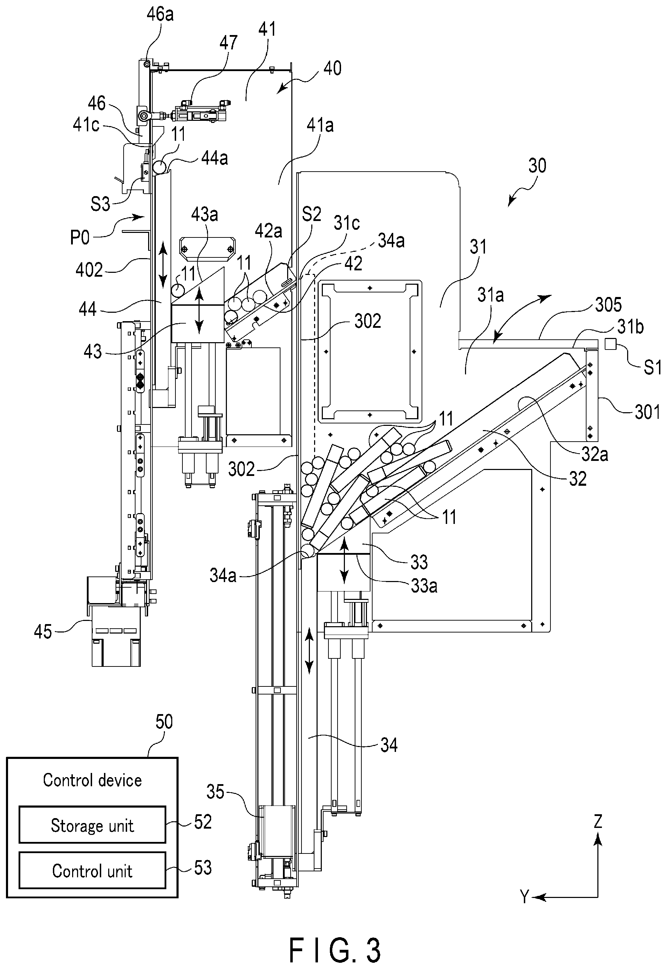

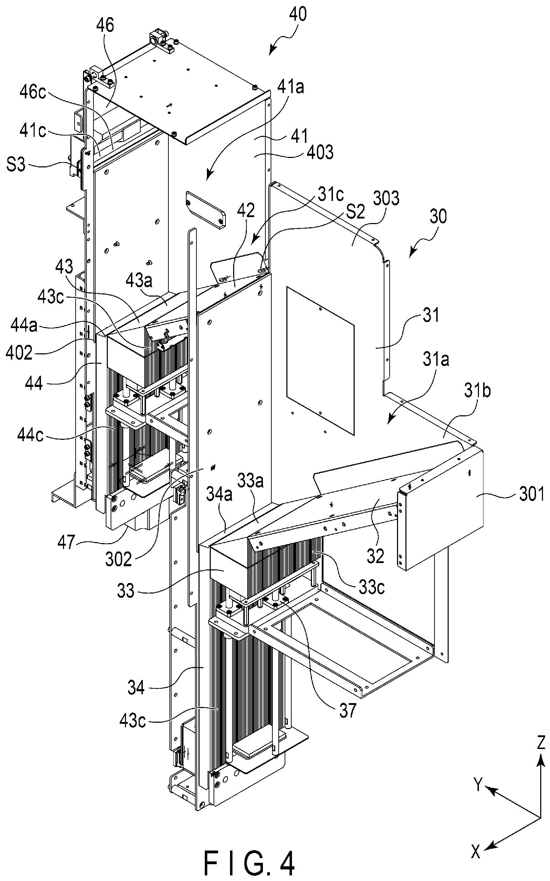

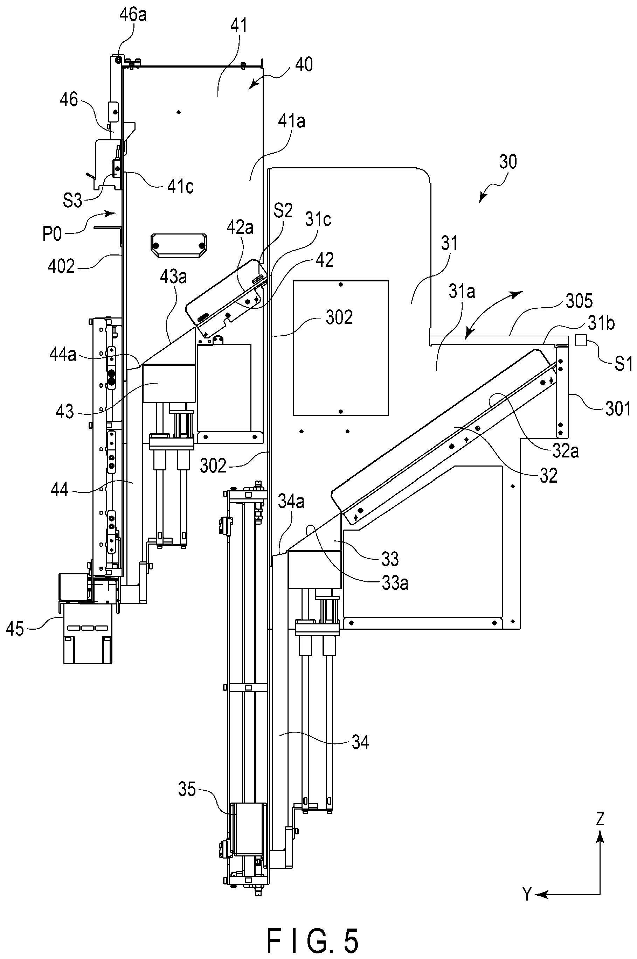

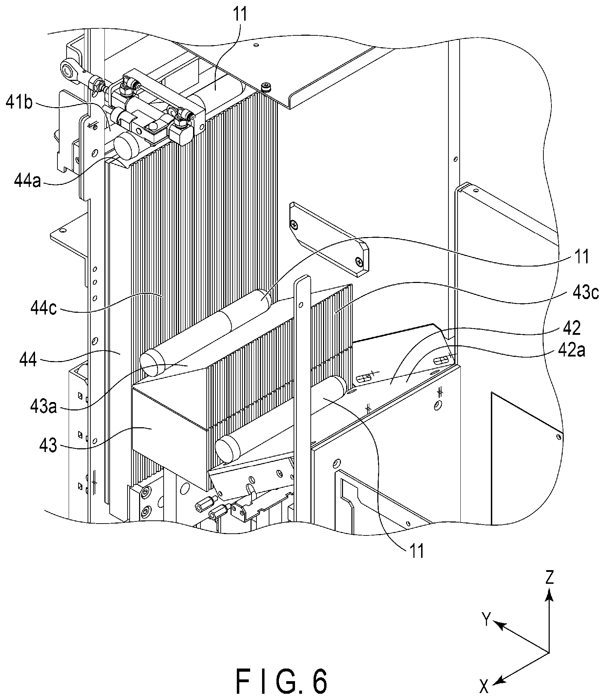

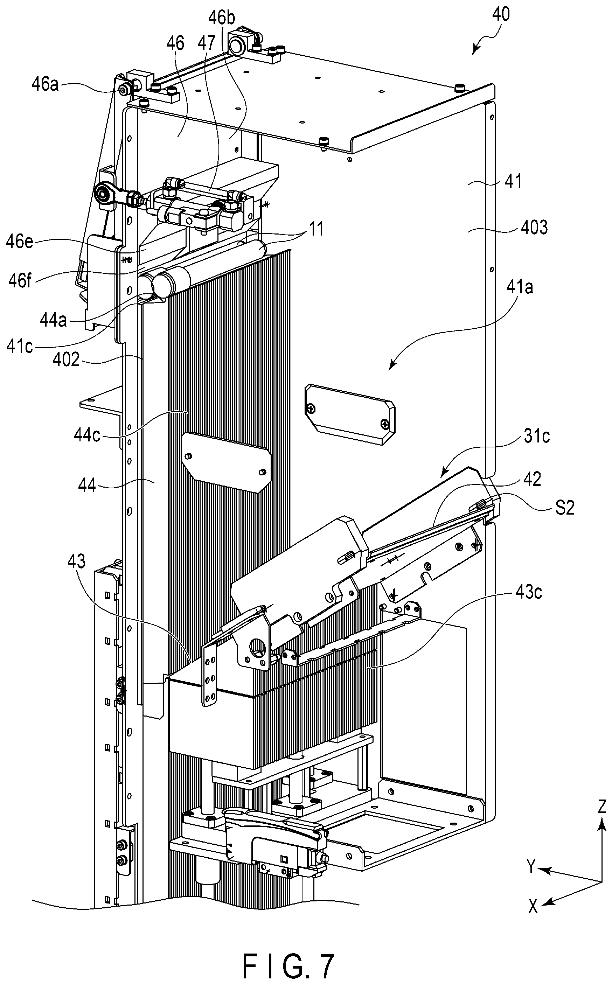

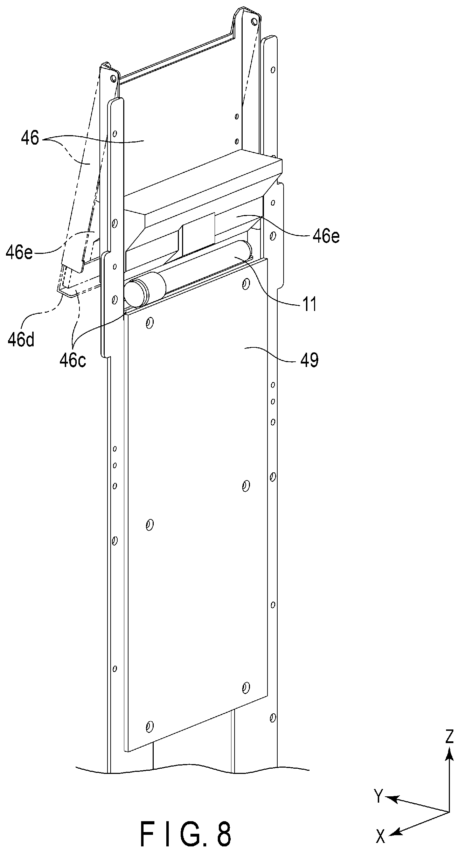

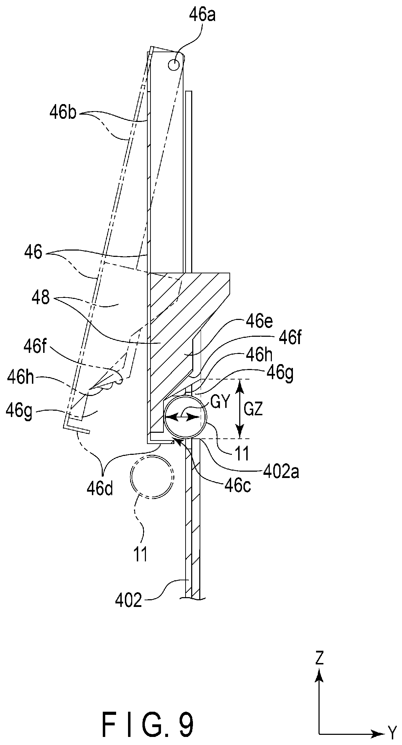

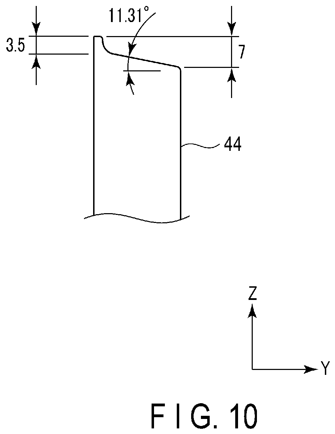

Hereinafter, a specimen supply device 1 according to a first embodiment of the present invention will be described with reference to FIGS. 1 to 10. In each drawing, the configuration is appropriately enlarged, reduced, or omitted. FIG. 1 is a perspective view of a specimen processing device according to the first embodiment. FIG. 2 is a perspective view of the specimen supply device, and FIG. 3 is a side view thereof. FIGS. 4 and 5 are a perspective view and a side view illustrating a state of the specimen processing device at the time of descending. FIG. 6 is an enlarged perspective view illustrating a part of the specimen processing device, and FIGS. 7 to 9 are explanatory views illustrating operation of the specimen supply device. FIG. 10 is an explanatory view illustrating a shape of an upper end surface of the specimen supply device. In the drawing, X, Y, and Z represent three different directions orthogonal to each other. For example, X along the lateral direction, which is the left-right direction, is the second direction, Y along the front-rear direction is the first direction, and Z along the vertical direction is the third direction.

The supply device 1 illustrated in FIGS. 1 to 6 is a device that supplies a plurality of specimen containers 11 in a predetermined posture prior to various inspections, and is used as one of preprocessing devices of an analyzer, for example. The specimen supply device 1 includes a first supply unit 30, a second supply unit 40, and a control unit 53.

The specimen supply device 1 aligns the postures of the plurality of randomly arranged specimen containers 11 while moving the specimen containers from a first housing space 31a of a rear first supply unit 30 toward a discharge port 41c of a front second supply unit 40 on one side in the first direction with vertical movement, and sends the specimen containers one by one to a supply destination such as a conveyance device provided in front as a lying state in which the axes are along the lateral direction.

For example, as illustrated in FIG. 1, a succeeding device such as a conveyance device 101 that guides and conveys a specimen container 11 along a predetermined conveyance direction, a holder conveyance device 102 that conveys a holder 12 holding the specimen container 11 in an upright state along a predetermined path, and an upright device 103 that rotates and stands the specimen container 11 and inserts the specimen container into the holder 12 is provided at a supply destination of the specimen supply device 1, and a processing device 100 that performs various types of processing on the specimen container 11 is configured.

As illustrated in FIGS. 1 to 6, the specimen container 11 is, for example, a tube type container formed of a transparent resin material. The specimen container 11 is, for example, a test tube or a blood collection tube. The specimen container 11 is formed in a bottomed cylindrical shape having a bottom portion, a head portion opened, and a space for housing a specimen therein.

A detachable cap that closes the opening is provided in the opening of the head portion of the specimen container 11. For example, a barcode including identification information is attached to an outer peripheral side surface of the specimen container 11. Note that, for example, the specimen supply device 1 is configured to be able to process various types of test tubes having different thicknesses and lengths. As the specimen container 11, for example, any test tube generally used such as a test tube having various sizes such as φ13×75 mm, φ13×100 mm, and φ16×100 mm and having a plastic stopper or a rubber stopper is targeted. For example, all of the housing spaces 31a and 41a and the members 32, 33, 34, 42, 43, and 44 in the housing spaces 31a and 41a are configured such that the dimension in the lateral direction along the X direction is larger than the length of the target specimen container 11, and the specimen container 11 can be housed along the X direction.

The first supply unit 30 includes a peripheral wall portion 31 as a first housing unit, a first guide member 32 (first guide portion), a first auxiliary member 33, a first push-up member 34, and a lifting drive unit 35.

As illustrated in FIGS. 2 to 4, the peripheral wall portion 31 includes a rear wall portion 301, a front wall portion 302, a pair of side wall portions 303, and an opening and closing lid 305, and forms the first housing space 31a capable of housing a plurality of specimen containers 11 therein together with the first guide member 32, the first auxiliary member 33, and the first push-up member 34 arranged at the bottom portion.

The rear wall portion 301 is a vertical wall member extending along the vertical direction and the lateral direction. For example, an opening serving as an insertion port 31b is formed above the rear wall portion 301.

The front wall portion 302 is, for example, a vertical wall member arranged to face the front of the rear wall portion 301 and extending along the vertical direction and the lateral direction. A discharge port 31c is formed in an upper portion of the front wall portion 302. The discharge port 31c is an opening communicating with a second housing space 41a of the second supply unit 40. The dimension of the front wall portion 302 in the X direction is larger than the length of the target specimen container 11, for example.

The side wall portion 303 is a vertical wall member extending along the vertical direction and the front-rear direction, and is provided on both side portions of the first housing space 31a in the lateral direction which is the second direction. In each drawing, a part of the peripheral wall portion 31 is omitted to show the internal structure.

The opening and closing lid 305 is a plate member that is provided in the insertion port 31b and opens and closes the insertion port 31b by an opening and closing operation. The opening and closing lid 305 is provided with an opening and closing sensor S1 capable of detecting an opening and closing operation of the opening and closing lid 305. The opening and closing sensor S1 detects an opening and closing operation of the opening and closing lid 305 and outputs the operation to the control unit 53.

The first guide member 32 is provided at a rear portion inside the peripheral wall portion 31. For example, the first guide member 32 has an upper end surface 32a that is a guide surface constituting an inclined surface inclined front-downward. The first guide member 32 forms a rear of the bottom surface of the first housing space 31a.

The first auxiliary member 33 is provided adjacent to the front side of the first guide member 32 inside the peripheral wall portion 31. The first auxiliary member 33 constitutes a part of the bottom portion of the first housing space 31a. The first auxiliary member 33 is connected to the drive unit 35, and is configured to be vertically movable with a predetermined stroke under the control of the control unit 53.

The first auxiliary member 33 is a block member having a trapezoidal shape in a cross-sectional view, and has an upper end surface 33a as a guide surface inclined front-downward so that the conveyance destination side is positioned downward. For example, the height dimension of the first auxiliary member 33 is configured to be larger than the stroke amount of the vertical movement.

For example, on a rear end surface 33b of the first auxiliary member 33 facing the front side of the first guide member 32, an uneven portion 33c having a groove or a protrusion extending along the vertical direction is formed.

The inclination angle of the upper end surface 33a of the first auxiliary member 33 is set to an angle equivalent to the inclination angle of the upper end surface 32a of the first guide member 32.

In a case where the first auxiliary member 33 descends, the upper end surface 33a is continuous to the front of the upper end surface 32a of the first guide member 32 and is continuous to the rear of the upper end surface 34a of the first push-up member 34 in the descended state. For example, at the time of descending, the upper end surface 33a of the first auxiliary member 33 and the upper end surface 32a of the first guide member 32 are continuous and flush with each other to form a front-downward inclined surface. For example, both the upper end surface 33a of the first auxiliary member 33 and the upper end surface 32a of the first guide member 32 are configured as inclined surfaces having an inclination angle of 35° or more so as to promote forward movement of the specimen container 11.

In a case where the first auxiliary member 33 rises, the upper end surface 33a is disposed above the upper end surface 32a of the first guide member 32, and is disposed at a height position below the upper end surface 34a of the first push-up member 34 in the lifted state.

The first auxiliary member 33 constitutes a part of the bottom portion of the first housing space 31a in which a large number of specimen containers 11 are housed, stirs the first housing space 31a on the back side of the first push-up member 34 by the vertical movement, and urges the movement such that the specimen containers 11 are placed on the first push-up member 34 in a predetermined posture.

The first push-up member 34 is provided adjacent to the inner surface of the front wall portion 302. The first push-up member 34 is connected to the drive unit 35, and is configured to be vertically movable with a predetermined stroke at a predetermined timing under the control of the control unit 53. The first push-up member 34 is a block member having a front-downward upper end surface 34a as a guide surface and having a width in which the specimen container 11 can be disposed. For example, the upper end surface 34a of the first push-up member 34 has a smaller dimension in the front-rear direction and a smaller dimension along the inclination direction than the upper end surface 33a of the auxiliary member 33.

For example, the dimension along the front-rear direction of the first push-up member 34 is larger than the diameter of the specimen container 11, for example, and is twice or less the diameter. The upper end surface 34a constitutes a curved surface or an inclined surface that holds one specimen container 11 in a posture along the X direction, for example. For example, in the present embodiment, the front portion of the upper end surface 34a forms an inclined surface that descends forward, and the rear portion of the upper end surface 34a forms a curved surface whose rear edge protrudes upward. The inclination angle of the front portion of the upper end surface 34a of the first push-up member 34 is configured to be smaller than the inclination angle of the upper end surfaces 32a and 33a of the first guide member 32 and the first auxiliary member 33. For example, the inclination angle of the inclined surface of the front portion of the first push-up member 34 is about 11.3°. On the rear end surface 34b of the first push-up member 34 facing the front side of the first auxiliary member 33, an uneven portion 34c having a groove or a protrusion extending along the vertical direction is formed.

The first push-up member 34 pushes up the specimen container 11 in accordance with the vertical movement, and supplies the specimen container to the discharge port 31c by the inclination of the upper end surface 34a.

In a case where the first push-up member 34 descends, the upper end surface 34a is arranged adjacent to the front of the upper end surface 33a of the auxiliary member 33 and is arranged to face the rear side of the front wall portion 302. For example, in a case where the first push-up member 34 descends, the uppermost protruding rear edge of the first push-up member 34 is continuous to the front side of the front edge of the upper end surface 33a of the first auxiliary member 33 and is located at the same height or slightly below the front side of the front edge of the upper end surface 33a. The first push-up member 34 forms a front-downward holding surface. The first push-up member 34 is disposed to face the front wall portion 302. Therefore, in a case where the first push-up member 34 descends, the first push-up member 34, the auxiliary member 33, and the front wall portion 302 form a groove-shaped recessed portion whose longitudinal direction is along the X direction and which has a predetermined width in the front-rear direction.

In a case where the first push-up member 34 rises, the upper end surface 34a rises to a position higher than the upper end surface 33a of the auxiliary member 33. The first push-up member 34 forms a groove-shaped recessed portion whose longitudinal direction is along the X direction and which has a predetermined width in the front-rear direction by the front-downward upper end surface 34a and the front wall portion 302, and holds the specimen container 11.

In the front-rear direction and the inclination direction of each inclined surface, the dimension of the upper end surface 34a of the first push-up member 34 is smaller than the dimension of the upper end surface 33a of the first auxiliary member 33, and the dimension of the upper end surface 33a of the first auxiliary member 33 is smaller than the dimension of the first guide member 32.

The drive unit 35 includes a drive source such as an air cylinder, and vertically moves the first auxiliary member 33 and the first push-up member 34 at a predetermined timing under the control of the control unit 53.

The second supply unit 40 includes a peripheral wall portion 41 which is a second housing unit, a second guide member 42 (second guide portion), a second auxiliary member 43, a second push-up member 44, a lifting drive unit 45, an opening and closing door 46 which is a regulating member, and an opening and closing drive unit 47.

The peripheral wall portion 41 includes a front wall portion 402, a pair of side wall portions 403, and an opening and closing door 46, and forms a second housing space 41a capable of housing a plurality of specimen containers 11 therein together with the second guide member 42, the second auxiliary member 43, and the second push-up member 44 disposed at the bottom portion.

The front wall portion 402 is a vertical wall member extending along the vertical direction and the lateral direction. An opening serving as a discharge port 41c is formed in an upper portion of the front wall portion 402. The opening and closing door 46 for opening and closing the discharge port 41c is rotatably provided on an upper edge of the discharge port 41c.

The side wall portion 403 is a vertical wall member extending along the vertical direction and the front-rear direction, and is provided on both sides in the lateral direction of the second housing space 41a.

For example, in a case where the opening and closing door 46 is opened, the specimen container 11 held by a holding portion 46c on the back side of the opening and closing door 46 falls forward, and is supplied to a supply destination below the discharge port 41c in a posture in which the longitudinal direction is along the X direction.

The second guide member 42 is provided inside the peripheral wall portion 41. For example, the second guide member 42 has an upper end surface 42a as a guide surface constituting an inclined surface inclined front-downward. The second guide member 42 forms a part of the rear of the bottom surface of the second housing space 41a. For example, a specimen detection sensor S2 that detects the presence or absence and the position of the specimen container is provided at a predetermined position of the second guide member 42. For example, as illustrated in FIG. 3, the rear end edge of the second guide member 42 disposed at the highest position is disposed below the front end edge of the upper end surface 34a of the first push-up member 34 at the time of rising indicated by a broken line in the drawing. For example, in the front-rear direction and the inclination direction, the dimension of the upper end surface 42a of the guide member 42 in the second supply unit 40 is set smaller than the dimension of the upper end surface 32a of the guide member 32 in the first supply unit 30.

The second auxiliary member 43 is provided adjacent to the front side of the second guide member 42 inside the peripheral wall portion 41. The second auxiliary member 43 constitutes a part of the bottom portion of the second housing space 41a. The second auxiliary member 43 is connected to the drive unit 45, and is configured to be vertically movable with a predetermined stroke.

The second auxiliary member 43 is a block member having a trapezoidal shape in a cross-sectional view, and has an upper end surface 43a as a guide surface inclined front-downward. For example, the height dimension of the second auxiliary member 43 is configured to be larger than the stroke amount of the vertical movement.

For example, an uneven portion 43c having a groove or a protrusion extending along the vertical direction is formed on a rear end surface 43b of the second auxiliary member 43 facing the front side of the second guide member 42.

The inclination angle of the upper end surface 43a of the second auxiliary member 43 is set to an angle equivalent to the inclination angle of the upper end surface 42a of the second guide member 42.

At the time of descending, the second auxiliary member 43 is disposed such that the upper end surface 43a is continuous to the front of the upper end surface 42a of the second guide member 42 and is continuous to the rear of the upper end surface 44a of the second push-up member 44 in the descended state. For example, at the time of descending, the upper end surface 43a of the second auxiliary member 43 and the upper end surface 42a of the second guide member 42 are continuous and flush with each other to form a front-downward inclined surface. For example, both the upper end surface 43a of the second auxiliary member 43 and the upper end surface 42a of the second guide member 42 are configured to have an inclination angle of 35° or more so as to promote forward movement of the specimen container 11.

At the time of rising, the upper end surface 43a of the second auxiliary member 43 is disposed above the upper end surface 42a of the second guide member 42, and is disposed at a height position below the upper end surface 44a of the second push-up member 44 in the lifted state.

The second auxiliary member 43 constitutes a part of the bottom portion of the second housing space 41a housing a large number of specimen containers, and stirs the second housing space 41a behind the second push-up member 44 by lifting and descending to urge the specimen containers 11 to move to the push-up member in a predetermined posture.

The drive unit 45 includes an electric drive source such as a motor, and vertically moves the second auxiliary member 43 at a predetermined timing under the control of the control unit 53.

The second push-up member 44 is provided adjacent to the rear side of the front wall portion 402. The second push-up member 44 is configured to be vertically movable by the drive unit 45. The second push-up member 44 has a front-downward upper end surface 44a as a guide surface. The specimen container 11 is a block member having a width in which one specimen container can be disposed, and has a height dimension larger than a lifting stroke. For example, in the front-rear direction and the inclination direction, the upper end surface 44a of the second push-up member 44 is configured to be smaller than the upper end surface 43a of the auxiliary member 43. For example, the dimension of the second push-up member 44 along the front-rear direction is larger than the diameter of the specimen container 11, for example, and is smaller than twice the diameter. The upper end surface 44a constitutes a curved surface or an inclined surface that holds one specimen container 11 in a posture along the X direction. For example, in the present embodiment, the upper end surface 44a forms a curved surface in which the front side is inclined downward and the rear edge protrudes upward. The inclination angle of the distal end of the second push-up member 44 is configured to be shallower than the inclination angles of the upper end surfaces 42a and 43a of the second guide member 42 and the second auxiliary member 43. For example, the inclination angle of the inclined surface of the distal end portion of the second push-up member 44 with respect to the XY plane orthogonal to the vertical direction is about 11.3°.

The second push-up member 44 pushes up the specimen container 11 in accordance with the vertical movement, and supplies the specimen container to the discharge port 41c by the inclination of the upper end surface 44a. For example, an uneven portion 44c having a plurality of rows of grooves formed along the vertical direction is formed on the rear end surface 44b of the second push-up member 44.

In a case where the second push-up member 44 descends, the upper end surface 44a is in a continuous positional relationship with the upper end surface 43a of the second auxiliary member 43.

In a case where the second push-up member 44 descends, the upper end surface 44a is arranged adjacent to the front of the upper end surface 43a of the auxiliary member 43 and is arranged to face the rear side of the front wall portion 402. For example, in a case where the second push-up member 44 descends, a rear edge of the second push-up member 44 which protrudes to the uppermost side is continuous to the front side of the front edge of the upper end surface 43a of the second auxiliary member 43 and positioned at the same height or slightly downward to form a front-downward holding surface. The second push-up member 44 is disposed to face the front wall portion 402. Therefore, at the time of descending, a groove-shaped recessed portion whose longitudinal direction is along the X direction and which has a predetermined width in the front-rear direction is formed between the auxiliary member 43 and the front wall portion 402 by the second push-up member 44.

In a case where the second push-up member 44 rises, the upper end surface 44a rises to a position higher than the upper end surface 43a of the second auxiliary member 43. The second push-up member 44 forms a groove-shaped recessed portion whose longitudinal direction is along the X direction and which has a predetermined width in the front-rear direction by the front-downward upper end surface 44a and the front wall portion 402, and holds the specimen container 11. In the front-rear direction and the inclination direction, the dimension of the upper end surface 44a of the second push-up member 44 is smaller than the dimension of the upper end surface 43a of the second auxiliary member 43, and the dimension of the upper end surface 43a of the second auxiliary member 43 is smaller than the dimension of the second guide member 42. As an example, in the present embodiment, the first guide member 32 is longer than the second guide member 42, the first auxiliary member 33 and the second auxiliary member 43 are configured to have the same size, and the first push-up member 34 and the second push-up member 44 are configured to have the same size. Therefore, the conveyance distance of the specimen container 11 in the second supply unit 40 is configured to be smaller than the conveyance distance of the specimen container 11 in the first supply unit 30. For example, the stroke of the vertical movement of the second push-up member 44 is smaller than the stroke of the vertical movement of the first push-up member 34.

The drive unit 45 includes an electric drive source such as a motor, and vertically moves the second auxiliary member 43 and the second push-up member 44 at a predetermined timing under the control of the control unit 53.

The opening and closing door 46 is provided in a discharge port 41c formed in the front wall portion 402. The opening and closing door 46 is rotatably attached to the second housing unit around a rotation shaft 46a along the X direction at an upper portion of the front end portion of the second housing unit.

The opening and closing door 46 is configured to be switchable between a closed posture in which the opening and closing door closes the discharge port 41c along the front wall portion 402 and an open posture in which the lower end side is separated outward from the front wall portion 402 to open the discharge port 41c by rotation. For example, the opening and closing door 46 is connected to the control unit 53 via a drive unit 47 having a drive mechanism such as an air cylinder, and rotates at a predetermined timing under the control of the control unit 53 to open and close the discharge port 41c.

The opening and closing door 46 includes a plate portion 46b and the holding portion 46c provided on a back side of the plate portion 46b.

The plate portion 46b is formed in a rectangular plate shape, and is disposed along the front wall portion 402 in the closed state to close the discharge port 41c. In addition, the plate portion 46b takes a posture in which the lower end edge is arranged to be spaced apart outward from the front wall portion 402 in the open state, and opens the discharge port 41c.

The holding portion 46c includes, for example, a bottom plate portion 46d protruding to the back side from a lower edge portion of the back surface of the plate portion 46b, and a guide protrusion 46e. The bottom plate portion 46d is a plate-like member whose longitudinal direction extends along the X direction on the lower side of the discharge port 41c, and forms a receiving surface orthogonal to the Z axis in the closed state.

The guide protrusion 46e is a protrusion that protrudes inward of the housing unit from a position above the bottom plate portion 46d in a predetermined direction on the back surface of the plate portion 46b. For example, the guide protrusion 46e has a guide surface 46f that protrudes rearward and upward in an inclined manner. In the closed state, a space capable of holding one specimen container 11 is formed by the guide surface 46f, the bottom plate portion 46d, and the upper edge portion of the front wall portion 402.

The holding portion 46c forms a space opened toward the inside of the housing unit between the bottom plate portion 46d and the guide protrusion 46e on the back surface side of the opening and closing door 46. The holding portion 46c is opened to the upper end surface side on the back side of the discharge port 41c, and a receiving portion 46g, which is a space capable of holding only one specimen container 11 in a posture along the lateral direction, is formed. For example, the receiving portion 46g is formed in a groove shape that opens rearward and extends in the lateral direction.

That is, the receiving portion 46g is a space that is disposed on the front side of the front-downward upper end surface 44a of the push-up member 44 at the time of rising and can hold only one specimen container 11 placed on the upper end surface 44a in a posture along the lateral direction. For example, the receiving portion 46g is formed by a gap formed between the upper edge portion 402a of the front wall portion 402 which is the lower edge of the discharge port 41c and the surface of the guide protrusion 46e, and the facing distance Gz in the vertical direction (Z direction) between the upper edge portion 402a of the front wall portion 402 and the surface of the guide protrusion 46e is configured to be about the diameter of the specimen container 11. As an example, the facing distance Gz is larger than the diameter of the specimen container 11 and smaller than twice the diameter. In addition, the width of the receiving portion 46g in the front-rear direction, that is, the facing distance Gy between the lower end portion of the guide protrusion 46e and the lower edge of the discharge port 41c in the front-rear direction (Y direction) is configured to be larger than the radius of the specimen container 11. In addition, the surface of the guide protrusion 46e is formed in a shape corresponding to the shape of the specimen container 11 in order to hold the specimen container 11, and for example, a pressing protrusion 46h protruding toward the outer surface of the specimen container 11 may be further provided.

That is, the holding portion 46c is configured to hold only one specimen container 11, in other words, to contain only one specimen container. Therefore, for example, even if two or more specimen containers 11 are placed on the push-up member 44, only one specimen container moves to the holding portion 46c, and then, as the push-up member 44 descends, the other specimen containers 11 also descend. Therefore, the holding portion 46c constitutes a regulating member that regulates the number and posture on which the specimen containers 11 are placed.

For example, in the vicinity of the opening and closing door 46, a specimen sensor S3 that detects the presence or absence of the specimen container 11 in the discharge port 41c on the back side of the opening and closing door 46 and outputs the detection result to the control unit 53 is provided.

The drive unit 47 includes an electric drive source such as a motor, and opens and closes the opening and closing door 46 at a predetermined timing under the control of the control unit 53.

A control device 50 is connected to the plurality of devices and the plurality of sensors S1, S2, and S3. The control device 50 includes a storage unit 52 that stores various types of information, and a control unit 53 (data processing unit) that performs data processing such as calculation and determination based on identification information and the like and controls the operation of each unit. The control unit 53 includes, for example, a processing circuit including a processor, and controls each unit to implement various functions of the specimen supply device 1 according to an operating system or an application program.

A specimen supply method (specimen processing method) according to the present embodiment will be described. As the specimen supply processing, processing of carrying a plurality of randomly input specimen containers 11 into a supply destination such as a transport path one by one is performed. Each processing is controlled by the control unit 53, and a series of processing is sequentially performed on the plurality of specimen containers 11.

As illustrated in FIGS. 2 to 9, a plurality of specimen containers 11 are housed in the first housing space 31a. For example, a plurality of the specimen containers 11 are randomly input from the insertion port 31b by hand or the like after blood collection.

In the descended state illustrated in FIGS. 4 and 5, the first guide member 32, the first auxiliary member 33, and the first push-up member 34 constitute a bottom surface portion. The bottom surface portion descends from the insertion port 31b side toward the front wall portion 302 where the discharge port 31c is formed, and the randomly input specimen containers 11 are collected on the lower side and the front side.

For example, the upper end surface 33a of the first auxiliary member 33 further extending forward and downward from the lower end edge of the first guide member 32 is disposed, and the upper end surface 34a of the first push-up member 34 is further disposed forward and downward from the front end portion of the upper end surface 34a.

As the supply processing, the control unit 53 repeats the vertical movement of the push-up members 34 and 44 and the auxiliary members 33 and 43 at predetermined time intervals. Further, the control unit 53 performs an opening and closing operation of the opening and closing door 46 based on a detection result of the sensor. FIGS. 2 and 3 illustrate a state in which the second auxiliary member 43 and the second push-up member 44 of the second supply unit 40 rose in a state in which the first push-up member 34 and the first auxiliary member 33 of the first supply unit 30 descended. FIGS. 4 and 5 illustrate a state in which the push-up members 34 and 44 and the auxiliary members 33 and 43 descended.

As a specific example, first, as the first supply processing, for example, the control unit 53 detects that input in the insertion port 31b is completed and the opening and closing lid 305 of the insertion port is closed, and controls to automatically start the next operation. That is, in a case where the opening and closing sensor S1 detects that the user has closed the door after the input, the control unit 53 drives the drive unit 35 and starts the vertical movement of the members 33 and 34 in the first supply unit 30.

In the first supply unit 30, a large number of specimen containers 11 randomly stacked on the front wall portion 302 side in the first housing space 31a are agitated as the bottom surface portion partially moves vertically by the vertical movement of the first auxiliary member 33. By this vertical movement, the plurality of specimen containers 11 randomly arranged in various directions sequentially move toward the upper end surface 34a of the first push-up member 34. That is, the specimen container 11 moves forward and downward by the action of gravity or stirring operation, and is sent to the upper end surface 34a of the first push-up member 34 in the descended state. For example, the first push-up member 34 has a groove shape along the X direction with a width of one specimen container 11, and the specimen container 11 is guided toward the front wall portion 302 on the front side by the front-downward upper end surfaces 33a and 34a.

Note that since the upper end surface 34a of the first push-up member 34 is front-downward and has a width that allows one specimen container 11 to be placed, the specimen containers 11 are often placed one by one on the first push-up member 34 and supplied to the second supply unit 40 side. However, depending on the arrangement of the specimen containers 11, two or more specimen containers 11 may be temporarily placed on the upper end surface 34a, or none may be placed. In a case where the first push-up member 34 rises, the excess specimen container 11 not placed on the upper end surface 34a is shaken backward. By repeating such vertical movement of the members 33 and 34, the specimen containers can be sequentially sent to the discharge port 31c while being aligned in the posture along the X direction.

In a case where the first push-up member 34 rises with the specimen container 11 placed thereon, the specimen container 11 falls and is supplied to the second housing space 41a from the discharge port 31c opened to the front side of the upper end surface 34a at the time of rising. For example, the plurality of specimen containers 11 in the second housing space 41a are aligned in the posture to some extent in the first supply unit 30 in the preceding process, and a large number of specimen containers 11 along the lateral direction are arranged.

In a case where the specimen detection sensor S2 detects that the specimen container 11 has been sent from the first supply unit 30 as the supply processing in the second supply unit 40, the control unit 53 drives the drive unit 45 to start the vertical movement of the members 43 and 44.

In the second supply unit 40, the specimen containers 11 supplied onto the front-downward second guide member 42 are collected to the front side and the lower side by gravity. Then, the bottom surface portion partially moves vertically by the vertical movement of the second auxiliary member 43, and the second housing space 41a is stirred. By this vertical movement, the plurality of specimen containers 11 randomly arranged in various directions move toward the upper end surface 44a of the second push-up member 44. That is, the specimen container 11 moves forward and downward by the action of gravity or stirring operation, and is sent to the upper end surface 34a of the first push-up member 34 in the descended state. For example, since the second push-up member 44 guides the specimen container 11 toward the front wall portion 402 on the front side or the opening and closing door 46 side of the discharge port 41c by the front-downward upper end surface 44a having the width of one specimen container 11 and having the longitudinal direction along the X direction, the specimen container 11 is carried to the holding portion 46c on the back side of the opening and closing door 46 by the second push-up member 44.

Note that the upper end surface 44a of the second push-up member 44 is front-downward, and the width in the front-rear direction is such a width that one specimen container 11 is placed. Therefore, in most cases, the specimen containers 11 are placed on the second push-up member 44 one by one and supplied to the discharge port 41c, but two or more specimen containers 11 may be temporarily placed on the upper end surface 44a due to the arrangement of the specimen containers 11. On the other hand, the specimen container 11 may fall into the rear space without any specimen container being placed on the second push-up member 44. By the rise of the second push-up member 44, the excess specimen container 11 that has not been placed on the upper end surface 44a is shaken down backward, and only the specimen container 11 placed on the upper end surface 44a is sent to the discharge port 41c in a posture along the X direction. As described above, by repeating the vertical movement of the members 43 and 44, the specimen container 11 can be sent to the discharge port 41c in a posture along the X direction.

As illustrated in FIGS. 7 to 9, at the discharge port 41c, the specimen container 11 is guided to the holding portion 46c of the opening and closing door 46. The holding portion 46c opens toward the upper end surface 44a on the rear side that is the inner side of the second housing unit, and forms a groove portion that holds only one specimen container 11 in a posture along the lateral direction. For example, since the opening of the holding portion 46c has a dimensional configuration capable of holding only one specimen container 11, the specimen containers 11 placed on the upper end surface 44a inclined front-downward may be sent one by one to the holding portion 46c, or no specimen container may be supplied. The specimen container 11 that has not been sent to the holding portion 46c falls in a case where the second push-up member 44 descends.

In a case where the specimen sensor S3 detects the specimen container 11, the control unit 53 determines that the specimen container 11 is set in the holding portion 46c at the discharge port 41c, stops the vertical movement, and drives the drive unit 47 to open the opening and closing door 46. In a case where the opening and closing door 46 is opened, the specimen container 11 is discharged from the opening and closing door 46 through the discharge port 41c opened to the front side of the upper end surface 44a at the time of rising, falls to the supply destination, and is supplied.

On the other hand, in a state where the opening and closing door 46 is closed and the specimen sensor S3 is OFF, the control unit 53 lifts and descends the members 43 and 44 again and performs vertical movement until the specimen sensor S3 is turned ON.

As described above, by repeating the vertical movement of the members 33, 34, 43, and 44 and the opening and closing operation of the door 46, in the first supply unit 30 and the second supply unit 40, the vertically moving members 33 and 43 promote the movement of the specimen container 11, and the specimen containers 11 are sequentially sent one by one to the upper end surfaces 34a and 44a of the push-up members 34 and 44. By repeating this operation, the postures of the randomly housed specimen containers 11 are aligned such that the longitudinal direction thereof is along the X direction one by one at regular time intervals, and the specimen containers are automatically sent to the supply position.

Note that, for example, in a case where the specimen container is continuously accumulated for a predetermined time based on the supply situation, the control unit 53 stops the vertical movement of the first supply unit 30 to stop the push-up operation and stop the supply of the specimen. In other words, the supply processing is continued until a predetermined amount of the specimen containers are stored.

In addition, in a case where the lifting and descending were repeated and the OFF state of the specimen sensor S3 continued for a certain period of time or a certain number of times, the control unit 53 determines that there is no supply target specimen container 11 and stops the supply operation.

For example, a conveyance device 101 such as a belt conveyor type conveyance mechanism unit is provided at a supply destination outside the discharge port 41c. The conveyance path of the conveyance device 101 is a passage of the specimen container 11 formed on the conveyance belt, and is set along the X direction in the drawing. The conveyance device 101 is configured to convey the specimen container 11 in a lying state along a predetermined conveyance path including a position immediately below the opening and closing door 46.

In a case where the members 33, 34, 43, and 44 move vertically, the specimen container 11 placed on the rear member slides with respect to the members 33, 34, 43, and 44 that move vertically on the front side. However, since the uneven portions 33c, 34c, 43c, and 44c such as grooves along the vertical movement direction are formed on the rear end surfaces of these members 33, 34, 43, and 44, friction due to the movement in the vertical movement direction can be reduced.

According to the specimen supply device 1 and the specimen processing method according to the present embodiment, the efficiency of the supply processing can be improved by making the mechanism two-stage.

For example, in a case where the number of specimen containers 11 is too large in the supply units 30 and 40, the specimen containers 11 are entangled and stacked in different directions, so that the probability that the specimen containers 11 ride on the second push-up member 44 one by one decreases, and the supply speed decreases. Therefore, it is preferable that the number of specimen containers 11 stacked in the second housing space 41a of the second supply unit 40 on the discharge side be particularly small. According to the present embodiment, with the two-stage mechanism, even if a large number of specimen containers are input at the time of input, the number of specimen containers 11 in the second supply unit 40 can be limited, so that the processing efficiency can be easily secured.

In addition, the shorter the lifting stroke of the second push-up member 44 in the second supply unit 40 on the discharge side, the more the processing efficiency can be improved. However, according to the present embodiment, by supplying members in two stages, the lifting stroke of the second push-up member 44 in the second supply unit 40 can be set short.

In addition, in the specimen supply device 1, since the amount of the specimen containers 11 can be detected by the specimen detection sensor S2 and the supply processing can be adjusted according to the state of the specimen containers 11, the number of specimen containers can be limited to an appropriate range.

Furthermore, according to the specimen supply device 1, since the two-stage type is adopted, it is possible to relax the restriction on the height position from the insertion port 31b to the discharge port 41c, and it is also possible to reduce the size. Therefore, for example, the specimen can be automatically supplied from the first supply unit 30 in which the installation height is set to be low to the second supply unit 40 in which the installation height is higher than that of the first supply unit 30.

In addition, by increasing the dimension on the first supply unit 30 side of the two-stage configuration and increasing the length in the depth direction, the dimension of the second supply unit 40 can be reduced and the length in the depth direction can also be shortened. Therefore, in the two-stage configuration, a decrease in the automatic supply speed can be prevented, and the processing can be performed at a higher speed.

In the above embodiment, the processing speed is more important in the second supply unit 40 than in the first supply unit 30. Therefore, by using an air drive mechanism for the first supply unit 30 and an electric drive mechanism for the second supply unit 40, it is possible to achieve both the securing of the processing speed and the cost reduction.

In addition, by forming the uneven portions 33c, 34c, 43c, and 44c on the rear end surfaces of the members 33, 34, 43, and 44, which are vertical movement members, the contact area of the specimen container 11 can be reduced, and the specimen container 11 can be prevented from being caught in the gap between the members. In particular, in a case where a rubber stopper is used, friction reduction is effective, and winding can be prevented.

Furthermore, in each of the supply units 30 and 40, the upper end surfaces of the guide members 32 and 42 and the auxiliary members 33 and 43 have an inclination angle of 35° or more, so that the specimen containers 11 can be easily collected on the front side. On the other hand, in the push-up members 34 and 44, both the holding and the friction reduction can be achieved by setting the inclination angle to be gentle. In addition, even if the plurality of specimen containers 11 are placed on the push-up members 34 and 44 of the supply units 30 and 40, the number of specimen containers 11 can be regulated in the opening and closing door 46 so that the specimen containers 11 are sequentially discharged one by one from the discharge port 41c.

Note that the present invention is not limited to the above-described embodiments as they are, and can be implemented by appropriately changing the shape, material, arrangement, and the like of each unit. For example, in the above embodiment, the example of two-stage type has been described, but the present invention is not limited thereto, and the number of supply units may be three or more, and the stages may be increased to a three-stage type or a four-stage type. In this case, it is also possible to further lower the insertion port.

Further, the guide members 32 and 42 can be omitted.

Note that the present invention is not limited to the above-described embodiments as they are, and can be embodied by modifying the components without departing from the gist of the invention at the implementation stage. Each component exemplified in the above embodiment may be deleted, and the shape, structure, material, and the like of each component may be changed. Various inventions can be formed by appropriately combining a plurality of components disclosed in the above embodiment.

## Claims

1. A specimen supply device, comprising:
a first supply unit including:
a first housing unit forming a first housing space capable of housing a plurality of specimen containers;
a first auxiliary member that is provided in the first housing space, has a guide surface that descends to one side in a first direction, and moves vertically; and
a first push-up member that is disposed adjacent to one side of the first auxiliary member in the first housing space, has a guide surface that descends to one side, and moves vertically;
a second supply unit including:
a second housing unit having a second housing space provided on one side of the first housing space;
a second auxiliary member that is provided in the second housing space, has a guide surface that descends to one side in the first direction, and moves vertically; and
a second push-up member that is disposed adjacent to one side of the second auxiliary member in the second housing space, has a guide surface that descends to one side, and moves vertically; and
a regulating member that is disposed adjacent to one side of the second push-up member at the time of rising and includes a holding portion that holds the specimen container.

2. The specimen supply device according to claim 1, wherein
the first supply unit includes a first guide portion which is disposed on the other side of the first auxiliary member in the first housing space and has a guide surface that descends on one side,
a bottom portion of the first housing space that descends to one side is formed by the guide surface of the first guide portion, the guide surface of the first auxiliary member at the time of descending, and the guide surface of the first push-up member at the time of descending,
the second supply unit includes a second guide portion which is disposed on the other side of the second auxiliary member in the second housing space and has a guide surface that descends on one side, and
a bottom portion of the second housing space that descends on one side is formed by the guide surface of the second guide portion, the guide surface of the second auxiliary member at the time of descending, and the guide surface of the second push-up member at the time of descending.

3. The specimen supply device according to claim 1, wherein the regulating member has a groove-shaped receiving portion that extends in a predetermined direction, is capable of placing one specimen container, and is opened to the second push-up member side on one side of the second push-up member at the time of rising.

4. The specimen supply device according to claim 3, wherein
the regulating member is an opening and closing door that opens and closes a discharge port formed on one side of the second housing unit, and
the holding portion is provided inside the opening and closing door.

5. The specimen supply device according to claim 2, wherein the guide surface is an upper end surface having an inclined surface or a curved surface in which one side in the first direction descends.

6. The specimen supply device according to claim 2, wherein
the guide surface of the first push-up member is smaller in dimension in the first direction than the guide surface of the first auxiliary member, and the guide surface of the second push-up member is smaller in dimension in the first direction than the guide surface of the second auxiliary member,
a length of the guide surface of the second guide portion is shorter than a length of the guide surface of the first guide portion, and
a stroke of the vertical movement of the second push-up member is smaller than a stroke of the vertical movement of the first push-up member.

7. The specimen supply device according to claim 2, wherein a plurality of grooves or protrusions along a vertical movement direction are formed on a surface on the other side in the first direction of the first push-up member, the first auxiliary member, the second push-up member, or the second auxiliary member.

8. The specimen supply device according to claim 2, wherein a lifted position of the first push-up member is disposed above a lifted position of the first auxiliary member.

9. The specimen supply device according to claim 2, further comprising a control unit that vertically moves the first push-up member, the first auxiliary member, the second push-up member, or the second auxiliary member at a predetermined timing, wherein
the control unit controls vertical movement in the first supply unit based on a supply status of the specimen container on the second guide portion.
